# EUROPÄISCHE PATENTSCHRIFT

(11) **EP 0 521 843 B1**
(45) Veröffentlichungstag und Bekanntmachung des Hinweises auf die Patenterteilung: **27.03.1996**
(21) Anmeldenummer: 92890141.2
(22) Anmeldetag: 12.06.1992
(51) Int. Cl.: F16D 65/12

(54) **Reibring**
Friction ring
Anneau de friction

(30) Priorität: 02.07.1991 AT 1313/91
(43) Veröffentlichungstag der Anmeldung: 07.01.1993
(73) Patentinhaber: HOERBIGER & Co., D-86956 Schongau (DE)
(72) Erfinder: Gemeinholzer, Gerd, W-8925 Altenstadt (DE)
(74) Vertreter: Klein, Adam, Dipl.Ing.

(56) Entgegenhaltungen:
- AT-B- 385 826
- DE-U- 6 604 366
- US-A- 4 260 047

## Beschreibung

Die Erfindung betrifft einen Reibring für Doppelsynchronisationen, mit einem mit Mitnahmeelementen, insbesonders Umfangsnocken bzw.- nuten, versehenen Ringkörper, der zwei konzentrische, konische Reibflächen aufweist, welche einen Reibbelag tragen.

Weiters betrifft die Erfindung auch ein Verfahren zur Herstellung eines Reibringes für Doppelsynchronisationen, wobei ein vorerst ebener mit Mitnahmeelementen, insbesonders Umfangsnocken bzw.- nuten, versehener Ringkörper an zwei im fertigen Zustand konzentrischen, konischen Reibflächen mit einem Reibbelag versehen wird.

Derartige Reibringe gewinnen insbesonders im Zusammenhang mit Doppelsynchronisationen von Fahrzeug-Getrieben in den letzten Jahren eine immer größere Bedeutung, da sich damit bei verbessertem Schaltkomfort zusätzlich auch noch eine kompaktere Bauweise erzielen läßt. In diesem Zusammenhang sind beispielsweise aus der AT-PS 385.826 Reibringe der genannten Art und ein Verfahren zu deren Herstellung bekannt geworden, wobei zur Ermöglichung der Verwendung eines Streusinter-Reibbelages die zunächst eben hergestellten Ringe erst nach dem Aufbringen des Reibbelages durch spanloses Verformen, wie z.B. Prägen, Tiefziehen oder dergleichen, in die endgültige Form gebracht werden. Insbesondere bei größeren Konus-Reibringen mit Durchmessern über 180 mm, wie sie z.B. in synchronisierten Schaltgetrieben in Nutzfahrzeugen Anwendung finden, ist es oftmals nur mit erhöhtem Fertigungsaufwand möglich für die Funktion wichtige Dimensionen und Toleranzen, wie Rundheit, Konus-Genauigkeit u.a., einzuhalten.

Aufgabe der vorliegenden Erfindung ist es, einen Reibring bzw. ein Verfahren der eingangs genannten Art so auszugestalten, daß ein vollständiges Anliegen der konischen Flächen auch bei weniger genauer Herstellung der Teile erzielt wird und so auf einfache Weise zuverlässig und problemlos funktionierende Reibringe bereitgestellt werden können.

Dies wird gemäß der Erfindung bei einem Reibring der eingangs genannten Art dadurch erreicht, daß der Ringkörper aus mindestens zwei separaten, relativ zueinander beweglichen Segmenten besteht, welche jeweils zumindest ein Mitnahmeelement aufweisen. Die entsprechende erfindungsgemäße Ausgestaltung des Herstellungsverfahrens ist dadurch gekennzeichnet, daß vorerst je Reibring zumindest zwei jeweils zumindest ein Mitnahmeelement aufweisende, zusammen im wesentlichen die komplette Ringform ergebende Segmente aus ebenem Material hergestellt werden, welche dann - in beliebiger Reihenfolge - mit dem Reibbelag versehen und in ihre endgültige Form gebracht werden.

Es können demnach untereinander beispielsweise auch völlig gleich ausgebildete, kleine und damit preiswerte Segmente, die mit einfachen Werkzeugen hergestellt werden, Verwendung finden, wobei trotzdem zumindest nahezu dieselbe Reibfläche wie bei herkömmlichen einstückigen Reibringen der genannten Art vorhanden ist. Durch die im eingebauten Zustand des Reibringes gegebene Beweglichkeit der einzelnen separaten Segmente relativ zueinander kann eine gleichmäßigere Belastungsverteilung erreicht werden, da die Segmente, beispielsweise entsprechend dem Schaltvorgang bzw. der dabei erfolgenden Bewegung einer Schiebemuffe, frei und sukzessive unabhängig voneinander zur Anlage kommen können. Weiters kann es bei der erfindungsgemäßen Lösung nicht zu einer Verspannung des Reibringes zwischen Außen- und Innenreibfläche kommen, da zwischen den separaten Segmenten praktisch keine Umfangskräfte wirken und somit nur weit weniger kritische Druck- und Scherbeanspruchungen, jedoch keine Biegespannungen auftreten können. Lebensdauerprobleme im Zusammenhang mit Dauerbrüchen durch Rißbildung werden mit der erfindungsgemäßen Lösung vermieden.

Mit erfindungsgemäßen Doppelkonus-Reibringen haben Prüfstandsversuche gezeigt, daß die Reibsegmente schneller wirksam werden und ein fast vollständiger Traganteil von Innen- und Außenkonus erreicht wird. Es kann damit eine einseitige Überbelastung von herausragenden Reibmaterialpartien weitgehend vermieden und die Lebensdauer erhöht werden.

Beim erfindungsgemäßen Herstellungsverfahren sind für die Biegeoperation zur Umformung der vorerst aus ebenem Metall hergestellten Segmente in die Konusform nur relativ kleine Kräfte erforderlich, die die Eigenschaften eines vorher aufgebrachten Reibbelages nicht oder nur vernachlässigbar beeinflussen, und zwar auch wenn Breite und Dicke des Reibringes insgesamt größer als bei einteiligen Reibringen ausgeführt werden.

Im Zusammenhang mit ebenen Ringlamellen für Lamellenkupplungen sind beispielsweise aus der DE-23 28 933 B1 Segmentlamellen bekannt, mit denen gleichzeitig mit der Ersparnis an Material bei der Herstellung durch Stanzen auch das sogenannte Schwenkspiel weitgehend beseitigt wird. Davon abgesehen, sind allerdings derartige ebene Segmentlamellen, wie sie beispielsweise auch aus der DE-21 64 418 B2 oder DE-21 59 194 A1 bekannt sind, nicht mit dem Gegenstand der vorliegenden Erfindung vergleichbar, da hinsichtlich Verwendung, Form und Herstellung für den Fachmann große Unterschiede gegeben sind.

Nach einer besonders bevorzugten weiteren Ausgestaltung der Erfindung ist vorgesehen, daß die Segmente an ihren jeweils einem anderen Segment zugewandten Seitenkanten Verbindungselemente zur losen Verbindung untereinander aufweisen. Auf diese Art wird die Handhabung der Segmente bzw. der daraus zusammengesetzten Reibringe verbessert sowie für besondere Einsatzfälle eine Verbindung der einzelnen Segmente in Umfangsrichtung erreicht. Durch die lose Verbindung ist trotzdem eine freie Anpassung der Segmente an die Gegenflächen gewährleistet, wobei zur Verbindung selbst in weiten Grenzen beliebige Verknüpfungsformen ausgeführt werden können.

Die Segmente können im Bereich der Mitnahmeelemente gemäß einer Ausgestaltung des erfindungsgemäßen Verfahrens auch warm- und/oder oberflächenbehandelt werden. Damit ist bei sicherer Mitnahme jedes einzelnen Segmentes erreicht, daß auch bei stoß- und schwingungsartiger Belastung ein Einschlagen bzw. ein Verschleiß im Bereich der Mitnahmeelemente vermieden wird. Die erwähnte Behandlung kann beispielsweise mit Induktions- oder Laserhärtung durchgeführt werden.

Um bei eben mit Reibbelag - beispielsweise Streusinter-Reibbelag - versehenen Segmenten eine Veränderung der Reibbelagseigenschaften durch die nachfolgende Umformung der Segmente im wesentlichen überhaupt auszuschließen, kann die Biegung der Segmente nach einer weiteren Ausgestaltung des erfindungsgemäßen Herstellungsverfahrens über Umformrillen erfolgen, die die Umformkräfte praktisch direkt auf den als Reibbelagsträger wirkenden Ringkörper übertragen.

In weitere Ausgestaltung der Erfindung können an den Reibflächen der Segmente Rillierungen, z. B. Waffelrillen, und/oder über die Breite der Segmente verteilte durchgehende Bohrungen vorgesehen werden. Bei Verwendung von Streusinter-Reibbelägen können die gewünschten Rillierungsformen in bekannter Weise sehr wirtschaftlich bereits am ebenen Segment durch Abdeckmasken oder Pressen erzeugt werden.

Bei der Verwendung von Synchronisationseinrichtungen bei sehr niedrigen Temperaturen (insbesonders unterhalb von -30°C) treten sehr leicht Probleme durch das sogenannte "Kaltkratzen" auf, die der Betätigung der Synchronisierung entgegenstehen. Ursache hiefür ist die starke Haftung des viskosen Öles an der Reibfläche. Bei der erfindungsgemäßen Ausführung ermöglicht die Segmentteilung, die wie Radialnuten wirkt, den Abfluß des Öles und so den raschen Momentaufbau an der Synchronisierung.

Um das Eingriffsverhalten von mit erfindungsgemäß ausgebildeten Reibringen ausgerüsteten Doppelsynchronisationen zu beeinflussen, können die einzelnen Segmente (vorzugsweise wird ein Reibring aus drei oder mehreren Segmenten zusammengesetzt) auch in Umfangsrichtung gewellt bzw. auch konkav, konvex oder in sonst geeigneter Weise von der rein konischen Form abweichend ausgeführt sein.

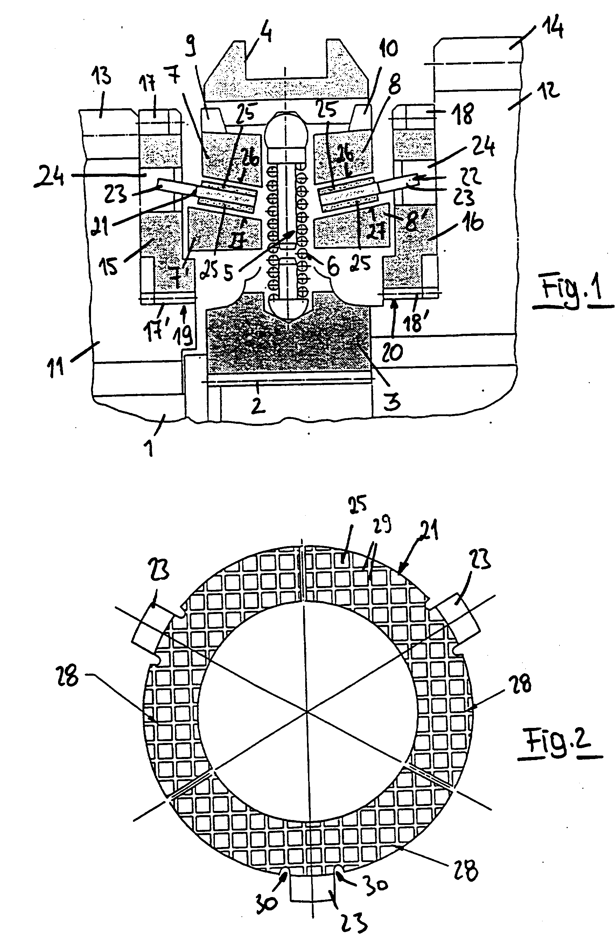

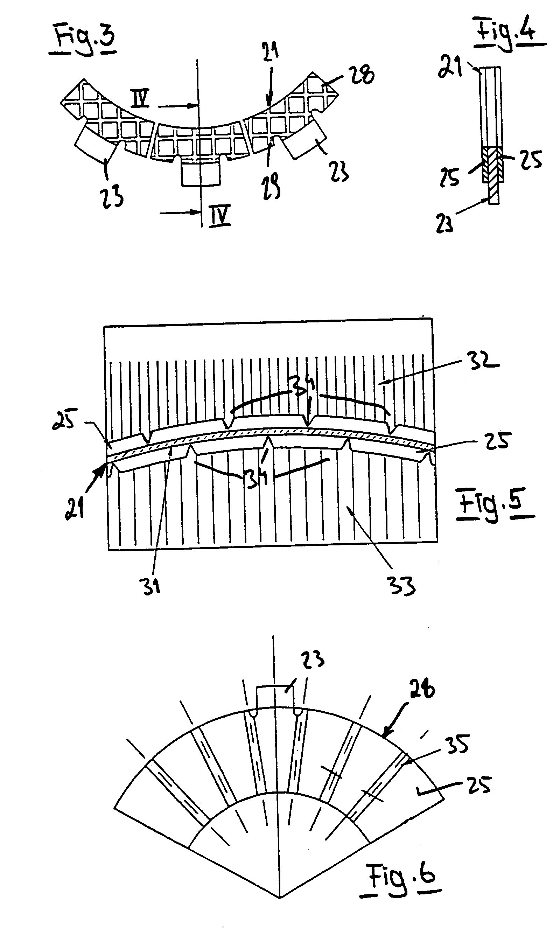

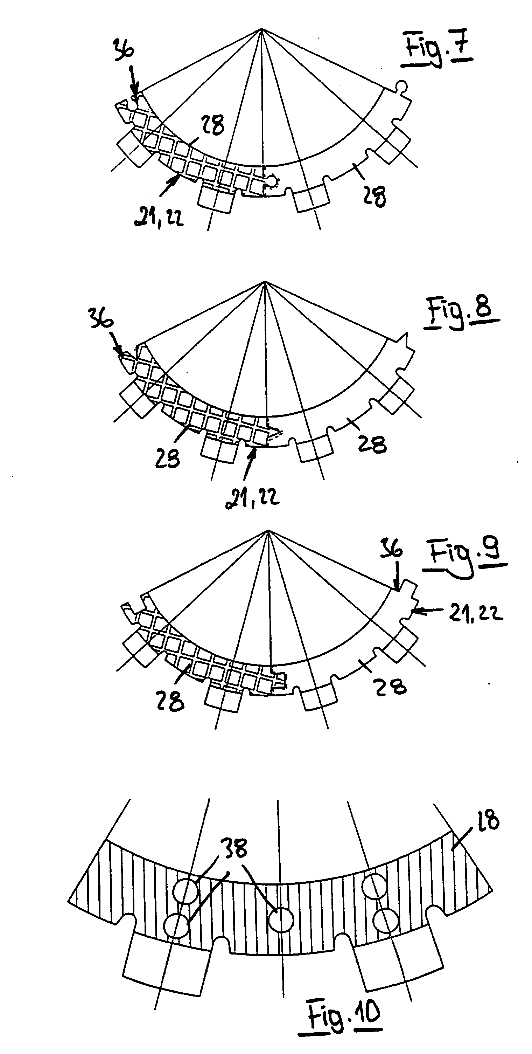

Die Erfindung wird im folgenden noch anhand der in der Zeichnung teilweise schematisch dargestellten Ausführungsbeispiele näher erläutert. Fig. 1 zeigt eine Synchronisierungseinrichtung für ein Kraftfahrzeugschaltgetriebe im axialen Mittelschnitt durch die obere Hälfte, mit erfindungsgemäß ausgebildeten Reibringen, Fig. 2 zeigt einen noch nicht in die endgültige Form gebrachten Reibring nach der vorliegenden Erfindung in Draufsicht, Fig. 3 einen Teil einer in der Darstellung der Fig. 2 entsprechenden anderen Ausführung nach der Erfindung, Fig. 4 einen Schnitt entlang der Linie IV-IV in Fig. 3, Fig. 5 einen Schnitt durch eine andere Ausführungsform eines erfindungsgemäßen Reibringes während der Herstellung, Fig. 6 eine Draufsicht auf ein Segment eines gemäß Fig. 5 hergestellten Reibringes und die Fig. 7 bis 10 zeigen jeweils einzelne Segmente von weiteren Ausführungsformen von erfindungsgemäßen Reibringen.

Die Synchronisierungseinrichtung nach Fig. 1 weist einen auf einer Getriebewelle 1 mittels einer Verzahnung 2 drehfest angeordneten Synchronkörper 3 auf, welcher mit einer Schiebemuffe 4 versehen ist, in die ein hier nicht dargestellter Schalthebel eingreift und die mit einer aus einem zweiteiligen bolzen 5 und einer Feder 6 bestehenden Federsperre versehen ist. Auf den beiden Seiten des Synchronkörpers 3 ist je ein Synchronring 7, 8 angeordnet, welcher jeweils mit einem formschlüssigen Mitnahmeelement, z.B. einer Verzahnung 9, 10, versehen ist, in die die Schaltmuffe 4 eingreift.

Auf der Getriebewelle 1 sind zu beiden Seiten des Synchronkörpers 3 Gangräder 11, 12 frei drehbar angeordnet, die je eine Verzahnung 13, 14 aufweisen. Mit jedem der Gangräder 11, 12 ist ein ringförmiger Kupplungskörper 15, 16 drehfest verbunden, welcher jeweils mit einer Verzahnung 17, 18 versehen ist, in die die Schaltmuffe 4 bei einer Verschiebung eingreifen kann. Die beiden Kupplungskörper 15, 16 sitzen drehfest form- oder kraftschlüssig, beispielsweise mittels der dargestellten Verzahnungen 17′, 18′, auf je einem entsprechenden Absatz 19, 20 der Gangräder 11, 12.

Die beiden Kupplungskörper 15, 16 stehen mit dem Synchronkörper 3 über je eine ein- und ausrückbare Reibungskupplung in Verbindung, welche je einen Reibring 21, 22 aufweist, der mit an seiner einen Seite vorragenden Mitnahmeelementen 23 in dazupassende Ausnehmungen 24 des zugeordneten Kupplungskörpers 15, 16 eingreift. Die Mitnahmeelemente 23 - beispielsweise gemäß Fig. 2 in Form von Umfangsnocken ausgebildet - können in der konischen Fläche der Reibringe 21, 22 geradlinig vorragen, wie in der Zeichnung dargestellt ist, sie könnten aber auch abgebogen sein, z.B. annähernd rechtwinkelig nach oben in Fig. 1, wobei auch der umgebogene Abschnitt in die zugehörige Ausnehmung 24 des Kupplungskörpers 15, 16 eingreift.

An ihrer konischen Außen- und Innenfläche sind die Reibringe 21, 22 zur Herstellung einer Reibfläche jeweils mit einem aufgesinterten Reibbelag 25 versehen, der mit konischen Kupplungsflächen 26, 27 des jeweils zugehörigen Synchronringes 7, 8 bzw. der Gegenstücke 7′, 8′stehen mit den Kupplungskörpern 15, 16 in nicht dargestellter Verbindung) zusammenwirkt.

Der Synchronkörper 3 bewegt sich mit der Getriebewelle 1 mit, wogegen die beiden Gangräder 11, 12 sich relativ zur Getriebewelle 1 und zum Synchronkörper 3 frei bewegen können. Wenn die Schiebemuffe 4 unter Überwindung der aus dem bolzen 5 und der Feder 6 gebildeten Sperre gegen eines der Gangräder 11, 12 verschoben wird, z.B. gegen das Gangrad 11, dann nimmt sie den Synchronring 7 mit, der nach kurzer Verschiebung mit seiner Kupplungsfläche 26 auf die mit dem Reibbelag 25 versehene Reibfläche des Reibringes 21 auftrifft und diesen auch weiters gegen das Gegenstück 7′ drückt. Dadurch kommt es zu einer Anpassung der Drehzahl des Synchronringes 7 und des Gangrades 11, also zu einer Synchronisierung. Sobald die Drehzahlen übereinstimmen, kann die Schiebemuffe 4 in die Verzahnung 17 des Kupplungskörpers 15 eingreifen und so eine drehfeste Verbindung zwischen dem Synchronring 7 und dem Gangrad 11 herstellen. Auf entsprechende Weise erfolgt auch die Verbindung zwischen dem Synchronkörper 3 und dem Gangrad 12 durch Verschieben der Schiebemuffe 4 nach rechts in der Darstellung nach Fig. 1.

In Fig. 2 ist ein aus drei separaten Segmenten 28 bestehender Reibring 21 in eben aufgelegtem Zustand - also in einem Verfahrensstadium bei der Herstellung, in dem die ebenen Segmente 28 zwar schon mit dem Reibbelag 25 und mit Waffelrillen 29 versehen sind, wobei jedoch noch keine Umformung in die konische Endform gemäß Fig. 1 stattgefunden hat - dargestellt. Jedes Segment 28 weist hier ein Mitnahmeelement 23 in Form eines nicht mit Reibbelag versehenen Umfangnockens auf, wobei zum Abschluß der Herstellung die Segmente 28 im bereich dieser Mitnahmeelemente 23 auch warm- und/oder oberflächenbehandelt werden können, was ebenso wie die Entlastungskerben 30 Beschädigungen der Reibringe in diesem Bereich verhindern hilft.

Bei der Ausführung nach den Fig. 3 und 4 ist als einzige wesentliche Abweichung zur Ausführung des Reibringes 21 nach Fig. 2 nun eine weitergehende Unterteilung der gesamten Ringform vorgesehen, welche hier zu zwölf einzelnen Segmenten 28 mit jeweils einem Mitnahmeelement 23 führt.

Es ist leicht einzusehen, daß auf diese Weise untereinander wie dargestellt auch völlig gleich ausgebildete, kleine und damit preiswerte Segmente, die mit einfachen Werkzeugen hergestellt werden, Verwendung finden können, wobei trotzdem zumindest nahezu dieselbe Reibfläche wie bei einem herkömmlichen einstückigen Reibring vorhanden ist. Durch die auch im eingebauten Zustand des Reibringes gegebene Beweglichkeit der einzelnen separaten Segmente relativ zueinander kann eine gleichmäßigere Belastungsverteilung erreicht werden, wobei auch Verspannungen hintangehalten werden. Der Reibring insgesamt kann damit schneller wirksam werden, wobei ein fast vollständiger Traganteil von Innen- und Außenkonus erreicht wird.

In Fig. 5 ist ein Ausschnitt aus einer Biegevorrichtung zur Umformung der in den Fig. 2 bis 4 eben dargestellten Segmente 28 in die endgültige konische Form (beispielsweise gemäß Fig. 1) dargestellt, wobei hier davon ausgegangen wird, daß der Ringkörper 31 ebenso wie in den Fig. 2 bis 4 bereits in ebenem Zustand mit Reibbelag 25 versehen ist. Sowohl das Oberteil 32 als auch das Unterteil 33 der Biegevorrichtung weist schneidenartige Erhebungen 34 auf, welche beim Verformen des Reibringes 21 zumindest teilweise durch den Reibbelag 25 dringen und sogenannte Umformrillen 35 - siehe die Darstellung des fertigen Segments 28 in Fig. 6 - bewirken. Auf diese Weise wird der Reibbelag 25 in den Bereichen zwischen den Umformrillen 35 vom Biegevorgang praktisch nicht beeinflußt, was in vielen Fällen erwünscht bzw. erforderlich ist.

In den Fig. 7 bis 9 sind jeweils zwei Segmente 28 von erfindungsgemäßen Reibringen 21 bzw.22 dargestellt, wobei hier nun die einzelnen Segmente 28 an ihren jeweils einem anderen Segment 28 zugewandten Seitenkanten 36 Verbindungselemente 37 zur losen Verbindung der einzelnen Segmente 28 untereinander aufweisen. Fig. 7 zeigt dabei eine Art Hammer-Kopf-Verbindung; Fig. 8 eine Dreiecks-Verbindung und Fig. 9 eine Rechtecks-Verbindung, wobei all diesen Verbindungsarten gemeinsam ist, daß sie relativ lose sind und den einzelnen Segmenten 28 auch im eingebauten Zustand gemäß Fig. 1 eine gewisse gegenseitige, freie Relativbewegung erlauben, womit die einzelnen Segmente 28 auch weitgehend unabhängig voneinander ihre jeweils optimale Anlageposition an den zugehörigen Reibflächen finden können.

Fig. 10 zeigt schließlich eine wiederum ebene Draufsicht auf ein weiteres erfindungsgemäß ausgebildetes Segment 28, welches über die Breite verteilt durchgehend Bohrungen 38 aufweist, die bei geschmierten bzw. in Kühlöl oder dergleichen laufenden Reibringen einen Mediumaustausch zwischen Innen- und Außenkonusfläche erlauben.

Abweichend von der dargestellten und besprochenen Ausführung der Reibringe mit auf einem üblicherweise metallischen Träger (beispielsweise Stahl, Bronze, Sinterpulverwerkstoff, oder dergleichen) aufgebrachten Reibwerkstoff (Molybdän, Streusinterreibbelag, organischer Reibbelag, CFC-Werkstoff, und dergleichen) könnte im Rahmen der Erfindung natürlich auch eine einstückige Ausführung der Segmente 28 (aus Werkstoffen wie Stahl, Bronze, Sinterpulverwerkstoffen, Reibwerkstoffen, z.B. auch Kunstharz) vorgesehen sein. Ebenso könnten die fertigen Reibringe von der rein konischen Form abweichend gestaltet sein, insbesonders gewellte, konkave oder konvexe Oberflächen aufweisen. Wesentlich im Rahmen der Erfindung ist nur der mehrteilige Aufbau aus einzelnen, auch im zusammengebauten Zustand einer mit einem derartigen Reibring versehenen Einrichtung noch in gewisser Weise relativ zueinander beweglichen Segmenten, welche nicht nur die Herstellung des Reibringes insgesamt vereinfachen, sondern - und vor allem - eine bessere Funktion durch bessere und einfachere Anpassung an die jeweiligen Gegenflächen sicherstellen.

## Patentansprüche

1. Reibring für Doppelsynchronisationen, mit einem mit Mitnahmeelementen (23), insbesonders Umfangsnocken bzw. - nuten, versehenen Ringkörper (31), der zwei konzentrische, konische Reibflächen (25) aufweist, welche einen Reibbelag (25) tragen, **dadurch gekennzeichnet**, daß der Ringkörper (31) aus mindestens zwei separaten, relativ zueinander beweglichen Segmenten (28) besteht, welche jeweils zumindest ein Mitnahmeelement (23) aufweisen.

2. Reibring nach Anspruch 1, dadurch gekennzeichnet, daß die Segmente (28) an ihren jeweils einem anderen Segment (28) zugewandten Seitenkanten (36) Verbindungselemente (37) aufweisen.

3. Reibring nach Anspruch 1 oder 2, dadurch gekennzeichnet, daß an den Reibflächen (25) der Segmente Rillierungen (29) und/oder über die Breite der Segmente (28) verteilte, durchgehende Bohrungen (38) vorgesehen sind.

4. Verfahren zur Herstellung eines Reibringes für Doppelsynchronisationen, wobei ein vorerst ebener mit Mitnahmeelementen (23), insbesonders Umfangnocken bzw. - nuten, versehener Ringkörper (31) an zwei im fertigen Zustand konzentrischen, konischen Reibflächen (25) mit einem Reibbelag versehen wird, **dadurch gekennzeichnet**, daß vorerst je Reibring (21) zumindest zwei, jeweils zumindest ein Mitnahmeelement (23) aufweisende, zusammen im wesentlichen die komplette Ringform ergebende Segmente (28) aus ebenem Material hergestellt werden, welche dann - in beliebiger Reihenfolge - mit dem Reibbelag (25) versehen und in ihre endgültige Form gebracht werden.

5. Verfahren nach Anspruch 4, dadurch gekennzeichnet, daß die Segmente (28) in ebener Form mit Reibbelag (25) versehen und anschließend über Umformrillen (35) von der ebenen in die konische Form gebogen werden.

6. Verfahren nach Anspruch 4 oder 5, dadurch gekennzeichnet, daß die Reibflächen (25) der Segmente (28) mit Rillierungen, z.B. Waffelrillen (29), versehen werden.

7. Verfahren nach einem der Ansprüche 4 bis 6, dadurch gekennzeichnet, daß die Segmente (28) im Bereich der Mitnahmeelemente (23) warm- und/oder oberflächenbehandelt werden.

## Claims

1. A friction ring for double synchronizing devices, having an annular member (31) provided with entrainment elements (23), in particular peripheral cams and grooves, and comprising two concentric conical friction faces (25) which have a friction lining (25), **characterized in that** the annular member (31) comprises at least two separate segments (28) movable relative to each other and each having at least one entrainment element (23).

2. A friction ring according to Claim 1, **characterized in that** the segments (28) are provided with connecting elements (37) on their lateral edges (36) facing another respective segment (28).

3. A friction ring according to Claim 1 or 2, **characterized in that** grooves (29) and/or continuous bores (38) distributed over the width of the segments (28) are provided on the friction faces (25) of the segments.

4. A method of producing a friction ring for double synchronizing devices, wherein an initially flat annular member (31) provided with entrainment elements (23), in particular peripheral cams and grooves, is provided with a friction lining (25) on two conical friction faces (25) which are concentric in the finished state, **characterized in that** at least two segments (28) each comprising at least one entrainment element (23) and together forming substantially the entire annular shape are initially produced *per* friction ring (21) from flat material, and they are then provided with the friction lining (25) in any desired sequence and are put into their final shape.

5. A method according to Claim 4, **characterized in that** the segments (28) are provided in a flat shape with the friction layer (25) and are then bent from the flat into the conical shape by way of deformation grooves (35).

6. A method according to Claim 4 or 5, **characterized in that** the friction faces (25) of the segments (28) are provided with grooves, for example honeycomb grooves (29).

7. A method according to one of Claims 4 to 6, **characterized in that** the segments (28) are heat- and/or surface-treated in the region of the entrainment elements (23).

## Revendications

1. Anneau de friction pour des synchronisations doubles, comportant un corps annulaire (31) pourvu d'éléments d'entraînement (23), en particulier de cames ou de gorges périphériques, qui présente deux surfaces de friction (25) concentriques et coniques qui portent une garniture de friction (25), caractérisé en ce que le corps annulaire (31) est constitué par au moins deux segments séparés (28) mobiles l'un par rapport à l'autre, qui présentent chacun au moins un élément d'entraînement (23).

2. Anneau de friction selon la revendication 1, caractérisé en ce que les segments (28) présentent des éléments de liaison (37) sur leurs arêtes latérales (36) orientées vers un autre segment respectif (28).

3. Anneau de friction selon l'une ou l'autre des revendications 1 et 2, caractérisé en ce qu'il est prévu, sur les surfaces de friction (25) des segments, des rainures (29) et/ou des perçages traversants (38) répartis sur la largeur des segments (28).

4. Procédé pour la fabrication d'un anneau de friction pour des synchronisations doubles, dans lequel un corps annulaire (31) tout d'abord plan et pourvu d'éléments d'entraînement (23), en particulier de cames ou de gorges périphériques, est pourvu d'une garniture de friction sur deux surfaces de friction (25) concentriques et coniques à l'état fini, caractérisé en ce que l'on fabrique tout d'abord pour chaque anneau de friction (21) au moins deux segments (28) en un matériau plan qui présentent chacun au moins un élément d'entraînement (23) et qui forment conjointement sensiblement la forme annulaire complète, ces segments étant ensuite pourvus, en une succession quelconque, de la garniture de friction (25) et amenés à leur forme définitive.

5. Procédé selon la revendication 4, caractérisé en ce que les segments (28) sont pourvus sous forme plane de la garniture de friction (25) et ensuite coudés via des gorges de reformage (35) depuis la forme plane jusqu'à la forme conique.

6. Procédé selon l'une ou l'autre des revendications 4 et 5, caractérisé en ce que les surfaces de friction (25) des segments (28) sont pourvues de rainures, par exemple de rainures gaufrées (29).

7. Procédé selon l'une quelconque des revendications 4 à 6, caractérisé en ce que les segments (28) sont traités à chaud et/ou en surface dans la région des éléments d'entraînement (23).
